# FASCICULE DE BREVET EUROPEEN

(11) **EP 0 480 847 B1**
(45) Date de publication et mention de la délivrance du brevet: **06.12.1995**
(21) Numéro de dépôt: 91420333.6
(22) Date de dépôt: 18.09.1991
(51) Int. Cl.: H02J 9/06

(54) **Installation d'alimentation en énergie électrique alternative avec alimentation de secours**
Wechselstromenergieversorgungsanlage mit Notstromversorgung
AC electric power system with emergency supply

(30) Priorité: 08.10.1990 FR 9012476
(43) Date de publication de la demande: 15.04.1992
(73) Titulaire: SCHNEIDER ELECTRIC SA, 92100 Boulogne Billancourt (FR)
(72) Inventeur: Fiorina, Jean-Noel, F-38050 Grenoble Cedex (FR); Amen, Dominique, F-38050 Grenoble Cedex (FR)
(74) Mandataire: Jouvray, Marie-Andrée

(56) Documents cités:
- EP-A- 0 074 910
- WO-A-89/01256
- US-A- 4 065 711
- US-A- 4 935 861

## Description

La présente invention se rapporte à une installation d'alimentation d'une charge en énergie électrique alternative, monophasée ou polyphasée, à partir d'un réseau, cette installation comportant une alimentation auxiliaire de secours apte à remplacer l'alimentation principale en cas de défaillance du réseau, un contacteur statique disposé entre la charge et le réseau, un dispositif de détection pour détecter quasi-instantanément la sortie du réseau hors de tolérances prédéterminées et contrôler l'ouverture du contacteur statique, et des moyens de détection du retour du réseau dans lesdites tolérances.

Il est connu d'utiliser comme alimentation de secours une batterie d'accumulateurs faisant fonctionner un onduleur. Un contacteur statique, qui est placé entre le réseau normal d'alimentation et la charge et qui est fermé en fonctionnement normal, s'ouvre automatiquement en cas de défaillance de ce réseau afin de le déconnecter immédiatement de la charge, et c'est alors l'onduleur qui alimente directement cette charge en énergie électrique. Lorsque cette défaillance, qui ne peut normalement être que passagère compte-tenu de la capacité limitée des batteries d'accumulateurs, a disparu, ce contacteur statique se referme et le réseau alimente à nouveau la charge, tandis qu'il recharge généralement ces batteries à travers l'onduleur qui fonctionne de manière réversible.

Lorsque l'utilisation est sensible, il est important que la charge soit très rapidement isolée du réseau en cas de défaillance de ce dernier. Il convient en conséquence d'une part de détecter très rapidement la défaillance du réseau, et d'autre part d'utiliser un contacteur statique à ouverture rapide.

Si la seconde condition ne pose actuellement pas de problèmes, en raison de l'utilisation pour ce contacteur statique de composants semi-conducteurs à capacité de blocage(transistors, GTO...) ou à blocage assisté par un circuit auxiliaire (thyristors),il n'en est pas de même de la détection rapide de la sortie du réseau de ses tolérances, qui est à la base de l'ordre de blocage du contacteur statique. Le réseau fournissant en effet une tension alternative, il n'est pas suffisant, pour une détection de défaillance quasi-instantanée, soit de mesurer sa tension de crête, soit de prendre en considération la valeur moyenne de sa tension redressée, ces deux processus classiques entraînant généralement un retard préjudiciable.

L'invention vise à remédier à ces inconvénients. Selon l'invention, le dispositif de détection quasi-instantanée de la sortie du réseau hors de ses tolérances, comporte un générateur produisant une tension alternative de même forme et de même fréquence que celles du réseau, d'amplitude fixe et déterminée, et asservi de manière à être en phase avec la tension du réseau, des moyens de comparaison pour comparer en permanence les amplitudes instantanées de la tension du réseau et de la tension de sortie du générateur et pour, lorsque la différence entre ces deux amplitudes dépasse un seuil prédéterminé, déclencher quasi-instantanément l'ouverture dudit contacteur statique.

Des moyens sont en outre prévus pour détecter ensuite le retour du réseau dans ses tolérances admissibles, pour alors asservir en phase ledit générateur sur le réseau, pour vérifier cet asservissement en phase ainsi que le retour de ladite différence des tensions en dessous dudit seuil, et pour refermer alors en conséquence le contacteur statique.

De toute façon, l'invention sera bien comprise, et ses avantages et autres caractéristiques ressortiront, lors de la description suivante d'un exemple non limitatif de réalisation, en référence aux dessins schématiques annexés dans lesquels:
La figure 1 est un schéma synoptique du dispositif de détection rapide équipant l'installation; et
Les figures 2A à 2D sont des courbes explicatives de son fonctionnement.

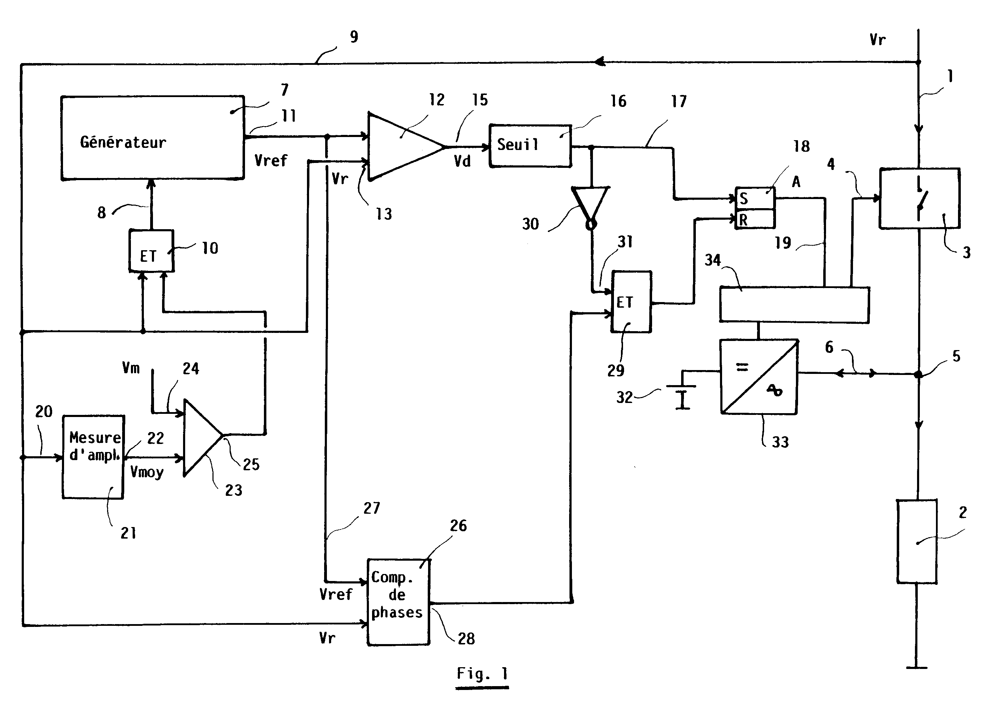

En se reportant à la figure 1, la référence 1 désigne la ligne d'arrivée du réseau alternatif, supposé ici monophasé pour simplifier le dessin. Ce réseau 1 alimente une charge 2 à travers un contacteur statique 3, à thyristors G.T.O par exemple, qui reçoit sur une entrée de commande 4 un signal de commande d'ouverture ou de fermeture. Une alimentation auxiliaire de secours comporte une batterie d'accumulateurs 32 connectée à un onduleur 33 commandé par un circuit de contrôle 34. L'alimentation auxiliaire est destinée à appliquer en un point 5 du conducteur reliant le contacteur statique à la charge,par une ligne 6, une tension alternative apte à remplacer le réseau 1 en cas de défaillance de celui-ci, c'est à dire en cas de sortie des limites de tolérance admissibles par la charge 2. Dans ce dernier cas, le signal appliqué sur l'entrée 4 commande l'ouverture du contacteur statique 3, afin d'isoler la charge 2 de la ligne défaillante 1: c'est alors l'onduleur qui alimente la charge par sa ligne de sortie 6.Lorsque le réseau 1 fonctionne normalement, le signal de commande appliqué sur l'entrée 4 est tel que le contacteur statique 3 est fermé, et le réseau 1 alimente la charge 2 et fournit en plus, par la ligne 6 et l'onduleur, un courant de recharge pour la batterie. Afin de permettre une détection quasi-instantanée de la sortie du réseau 1 hors de ses tolérances, il est prévu un générateur 7 de tension sinusoïdale de même fréquence que celle du réseau et d'amplitude fixe. Ce générateur 7 est asservi en phase avec la tension Vr du réseau par une commande 8 de régulation de phase qui reçoit la tension du réseau 1 par l'intermédiaire d'un conducteur 9 et d'un circuit "ET" 10, dont le rôle sera expliqué ci-après et qui sera pour le moment considéré comme passant.

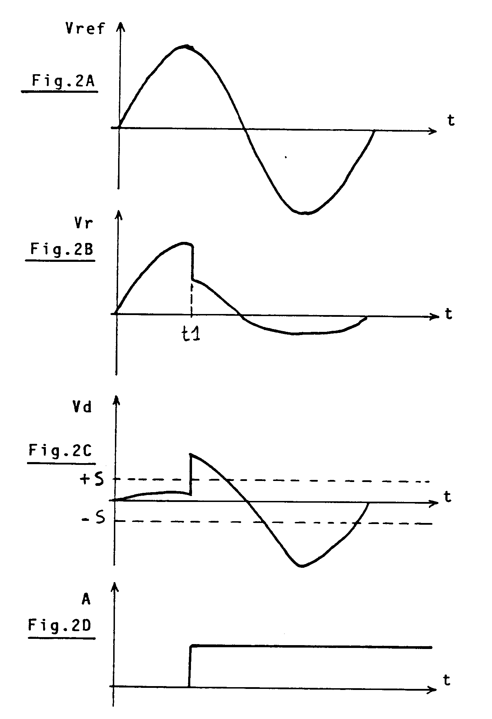

Ce générateur fournit donc sur sa sortie 11 une tension sinusoïdale Vref, représentée en figure 2A, en phase avec celle du réseau, de même période, et d'amplitude fixe et déterminée, égale dans cet exemple à celle du réseau alternatif 1.

Cette tension Vref est appliquée à une première entrée d'un comparateur de tensions 12 qui reçoit sur sa seconde entrée 13 la tension Vr du réseau, par le conducteur 9 précité. Cette tension Vr de réseau est représentée en figure 2B, et est supposée sortir de ses tolérances (chuter brusquement) à l'instant t1.

En sortie 15 du comparateur 12 existe donc une tension Vd qui est la différence entre la tension réseau Vr et la tension Vref, et qui est donc sensiblement nulle en régime normal. Cette tension Vd est appliquée à un circuit à seuil 16, dont les seuils "haut" +S et "bas" - S sont représentés en figure 2C, qui illustre la courbe représentative de cette différence de tension Vd. La valeur absolue S du seuil peut, par exemple, être de l'ordre de 10% de la tension crête de la tension de référence Vref.

Tant que la différence instantanée Vd des deux tensions précitées reste comprise entre les deux seuils +S et -S, le signal de sortie 17 du circuit 16 est par exemple au niveau "O", de sorte qu'une bascule bistable 18 qui reçoit, sur une entrée S, le signal 17 à zéro fournit un signal A de niveau "O" sur sa sortie. Le signal de sortie de la bascule 18 est représenté à la figure 2D. La sortie de la bascule bistable 18 est connectée, par un conducteur 19, au circuit de contrôle 34 de l'onduleur 33. Le circuit de contrôle 34 fournit alors sur une sortie reliée à l'entrée de commande 4 du contacteur statique un signal tel que le contacteur statique reste fermé.Simultanément, le circuit de contrôle 34 commande l'onduleur 33 de manière à ce qu'il charge la batterie 32.
A l'instant t1, la tension réseau Vr chute brusquement, de sorte que la courbe Vd (figure 2C)vient dépasser le seuil +S du circuit 16. La bascule 18 est alors activée par le signal de niveau "1" apparaissant sur son entrée S, et sa sortie A passe au niveau "1" (figure 2D), ce qui, par l'intermédiaire du circuit de contrôle 34, entraîne l'ouverture du contacteur 3, de manière quasi-instantanée à l'instant t1 correspondant à la chute de la tension du réseau. Par ailleurs, le circuit de contrôle 34 agit simultanément, sur la commande de découpage de l'onduleur 33 afin de faire fonctionner ce dernier en alimentation de secours lorsque le signal A est au niveau "1".

Afin de rendre cette installation totalement automatique,il est en outre avantageusement prévu des moyens pour valider ensuite le retour en tolérances du réseau 1. Le contacteur statique 3 n'est refermé que lorsque la remise en phase du réseau et du générateur 7 a été effectuée, et que la différence Vd des tensions précitée (courbe de la figure 2C) est redevenue, en valeur absolue, inférieure à la valeur de seuil S. Ce retour n'a pas besoin d'être rapide, car il importai peu que l'onduleur fonctionne quelques instants de plus. En pratique le circuit de contrôle 34 ferme le contacteur statique lorsque ces conditions sont réunies et que la tension du réseau est en phase avec la tension de sortie de l'onduleur, de manière à minimiser les phénomènes de transition.

En conséquence, la tension Vr du réseau est appliquée par le conducteur 9 à l'entrée 20 d'un circuit 21 de mesure d'amplitude, par exemple de valeur moyenne, dont la sortie 22 est appliquée à un comparateur de tensions 21 qui reçoit sur son autre entrée 24 une tension Vm de référence prédéterminée et déterminant la tension de tolérance: lorsque la tension Vmoy mesurée par le circuit 21 atteint à nouveau cette tension de référence Vm, le réseau est considéré comme redevenu normal. Le signal en sortie 25 du comparateur 23 autorise alors l'ouverture de la porte ET 10 précitée (qui s'était fermée précédemment à l'instant t1 de la figure 2B), ce qui valide par l'entrée de commande 8 l'asservissement en phase du générateur 7 à la tension du réseau.

Un comparateur de phases 26, qui reçoit la tension réseau Vr et, par un conducteur 27, la tension Vref de sortie du générateur 7, fournit sur sa sortie 28 un niveau "1" lorsque ses tensions Vr et Vref d'entrée sont en phase.

Cette sortie 28 est appliquée à un circuit"ET" 29 qui reçoit sur son autre entrée 31 la sortie, inversée au moyen d'un inverseur logique 30, du circuit à seuil 16: lorsque la différence instantanée Vd des tensions du réseau et du générateur 7 est revenue, en valeur absolue, en dessous de la valeur S, la sortie 17 est alors au niveau "0", de sorte que le niveau "1" apparaît sur l'entrée 31. La porte 29 s'ouvre donc et une impulsion de basculement de la bascule bistable 18 est appliquée à une entrée R de cette dernière, ce qui entraîne la remise à l'état "0" du signal A appliqué au circuit de contrôle 19, et, par la suite, d'une part la fermeture du contacteur statique 3 et d'autre part la modification du découpage de l'onduleur afin qu'il serve maintenant, par la ligne 6, à la recharge de la batterie par le réseau 1.

## Revendications

1. Installation d'alimentation d'une charge (2) en énergie électrique alternative à partir d'un réseau (1), cette installation comportant une alimentation auxiliaire de secours apte à remplacer l'alimentation principale en cas de défaillance du réseau, un contacteur statique (3)disposé entre la charge (2) et le réseau (1),un dispositif de détection pour détecter quasi-instantanément la sortie du réseau hors de tolérances prédéterminées et contrôler l'ouverture du contacteur statique, et des moyens (21,23) de détection du retour du réseau dans lesdites tolérances, installation caractérisée en ce que le dispositif de détection comporte un générateur (7) produisant une tension alternative (Vref) de même forme et de même fréquence que celles du réseau, d'amplitude fixe et déterminée, et asservi (8) de manière à être en phase'avec la tension (Vr) de ce réseau, des moyens de comparaison (12,16,18)pour comparer en permanence les amplitudes instantanées de la tension (Vr) du réseau et de la tension (Vref) de sortie du générateur (7) et pour, lorsque la différence (Vd) entre ces deux amplitudes dépasse un seuil prédéterminé (+/-S), déclencher quasi-instantanément l'ouverture du contacteur statique (3).

2. Installation selon la revendication 1, caractérisée en ce que l'amplitude fixe et déterminée de la tension (Vref) fournie par ce générateur (7) est choisie sensiblement égale à l'amplitude de la tension du réseau (1).

3. Installation selon l'une des revendications 1 et 2, caractérisée en ce que lesdits moyens de comparaison comportent un comparateur (12) dont la sortie est connectée à l'entrée d'un circuit à seuil (16), la sortie du circuit à seuil (16) étant connectée à une entrée (S) d'une bascule bistable (18) de manière à fournir en sortie de la bascule un signal (A) de commande d'ouverture du contacteur statique.

4. Installation selon l'une quelconque des revendications 1 à 3, caractérisée en ce qu'elle comporte des moyens (10) de commande de l'asservissement en phase du générateur (7) connectés à la sortie des moyens de détection du retour du réseau, des moyens (26) de vérification de cet asservissement en phase, et des moyens de commande contrôlant la fermeture du contacteur statique (3), lorsque le générateur (7) est asservi en phase sur le réseau et que la différence (Vd) entre les amplitudes de la tension (Vr) du réseau et la tension de sortie (Vref) du générateur est, en valeur absolue, inférieure audit seuil prédéterminé (S).

5. Installation selon la revendication 4, caractérisée en ce que lesdits moyens de détection du retour du réseau comportent un circuit (21) de mesure de l'amplitude (Vmoy) de la tension (Vr) du réseau et des moyens de comparaison de cette amplitude (Vmoy) à une valeur (Vm) de référence.

6. Installation selon l'une des revendications 4 et 5, caractérisée en ce que lesdits moyens de commande de l'asservissement en phase du générateur (7) sur le réseau comportent une porte ET (10)dont une entrée reçoit la tension du réseau (Vr) et dont l'autre entrée est connectée à la sortie (25) des moyens (21,23) de détection du retour du réseau,la sortie de la porte ET étant connectée à une entrée (8) de commande de régulation de phase du générateur (7).

7. Installation selon l'une quelconque des revendications 4 à 6, caractérisée en ce que les moyens de commande de la fermeture du contacteur statique comportent une bascule bistable (18)dont la sortie est connectée à l'entrée de commande du contacteur statique et dont l'entrée(R) de remise à zéro est connectée à la sortie de la seconde porte ET (29), une première entrée de la seconde porte ET(29) étant connectée à la sortie (28) des moyens de vérification de l'asservissement en phase et une seconde entrée (31) de la seconde porte ET (29) étant connectée, par l'intermédiaire d'un inverseur (30) à la sortie des moyens (12,16) de comparaison des amplitudes de la tension (Vr) du réseau et de la tension (Vref) du générateur (7).

## Patentansprüche

1. Anlage zur Versorgung einer Last (2) mit einer einphasigen oder mehrphasigen Wechselspannung über ein Netz (1), wobei die genannte Anlage eine Ersatzstromversorgung, die die Hauptstromversorgung bei einer Netzstörung ersetzen kann, einen zwischen die Last (2) und das Netz (1) eingesetzten elektronischen Schalter (3), eine Erfassungsschaltung, die dazu dient, das Verlassen bestimmter Toleranzgrenzen durch das Netz quasi-verzögerungsfrei zu erfassen und das Öffnen des elektronischen Schalters zu steuern, sowie Mittel (21, 23) zur Erfassung der Rückkehr des Netzes in die genannten Toleranzgrenzen umfaßt, dadurch gekennzeichnet, daß die Erfassungsschaltung eine Spannungsquelle (7), die eine in Form und Frequenz mit der Netzspannung übereinstimmende Wechselspannung mit bestimmter fester Amplitude erzeugt und bezüglich der Phasenlage mit der Netzspannung abgeglichen ist, sowie Mittel (12, 16, 18) umfaßt, die dazu dienen, die Augenblickswerte der Amplituden von Netzspannung (Vr) und Ausgangsspannung (Vref) der Spannungsquelle (7) kontinuierlich zu vergleichen und das quasi-verzögerungsfreie Öffnen des genannten elektronischen Schalters (3) zu bewirken, wenn die Differenz (Vd) zwischen diesen beiden Amplituden einen bestimmten Schwellwert (+/- S) überschreitet.

2. Anlage nach Anspruch 1, dadurch gekennzeichnet, daß die bestimmte feste Amplitude der von dieser Spannungsquelle (7) gelieferten Spannung (Vref) annähernd der Amplitude der Spannung des Netzes (1) entspricht.

3. Anlage nach einem der Ansprüche 1 und 2, dadurch gekennzeichnet, daß die genannten Vergleichsmittel einen Komparator (12) umfassen, dessen Ausgang mit dem Eingang einer Schwellwertschaltung (16) verbunden ist, wobei der Ausgang der Schwellwertschaltung (16) mit einem Eingang (S) einer bistabilen Kippstufe (18) verbunden ist, so daß am Ausgang der Kippstufe ein Signal (A) bereitgestellt wird, um das Öffnen des elektronischen Schalters zu steuern.

4. Anlage nach irgendeinem der Ansprüche 1 bis 3, dadurch gekennzeichnet, daß sie an den Ausgang der Mittel zur Erfassung der Netzrückkehr angeschlossene Mittel (10) zur Steuerung des Phasenabgleichs der Spannungsquelle (7), Mittel (26) zur Überprüfung dieses Phasenabgleichs sowie Steuermittel umfaßt, die das Schließen des elektronischen Schalters (3) steuern, wenn der Phasenabgleich der Spannungsquelle (7) mit dem Netz erfolgt ist und der Absolutwert der Differenz (Vd) zwischen den Amplituden der Netzspannung (Vr) und der Ausgangsspannung (Vref) der Spannungsquelle unter dem genannten bestimmten Schwellwert (S) liegt.

5. Anlage nach Anspruch 4, dadurch gekennzeichnet, daß die genannten Mittel zur Erfassung der Netzrückkehr eine Schaltung (21) zur Messung der Amplitude (Vmoy) der Netzspannung (Vr) sowie Mittel zum Vergleich dieser Amplitude (Vmoy) mit einem Bezugswert (Vm) umfaßt.

6. Anlage nach einem der Ansprüche 4 und 5, dadurch gekennzeichnet, daß die genannten Mittel zur Steuerung des Phasenabgleichs der Spannungsquelle (7) mit dem Netz ein UND-Gatter (10) umfassen, dessen erster Eingang mit der Netzspannung (Vr) beaufschlagt wird und dessen anderer Eingang mit dem Ausgang (25) der Mittel (21, 23) zur Erfassung der Netzrückkehr verbunden ist, wobei der Ausgang des UND-Gatters mit einem Eingang (8) zur Steuerung des Phasenabgleichs der Spannungsquelle (7) verbunden ist.

7. Anlage nach irgendeinem der Ansprüche 4 bis 6, dadurch gekennzeichnet, daß die Mittel zur Steuerung des Schließens des elektronischen Schalters eine bistabile Kippstufe (18) umfassen, deren Ausgang mit dem Steuereingang des elektronischen Schalters und deren Rücksetzeingang (R) mit dem Ausgang des zweiten UND-Gatters (29) verbunden ist, wobei ein erster Eingang des zweiten UND-Gatters (29) mit dem Ausgang (28) der Mittel zur Überprüfung des Phasenabgleichs und ein zweiter Eingang (31) des zweiten UND-Gatters (29) über eine Inverterstufe (30) an den Ausgang der Mittel (12, 16) zum Vergleich der Amplituden der Netzspannung (Vr) und der Ausgangsspannung (Vref) der Spannungsquelle (7) verbunden ist.

## Claims

1. An installation to supply AC electrical power to a load (2) from a mains power supply (1), this installation comprising an auxiliary back-up power supply capable of replacing the main power supply in the event of a mains supply failure, a static switch (3) located between the load (2) and the mains power supply (1), a detection device for detecting almost instantaneously when the mains power supply goes outside preset tolerances and for controlling opening of the static switch, and means (21, 23) for detecting the return of the mains power supply to within said tolerances, an installation characterized in that the detection device comprises a generator (7) producing an AC voltage (Vref) of the same form and the same frequency as those of the mains power supply, with a fixed set amplitude, and controlled (8) so as to be in phase with the voltage (Vr) of this mains power supply, comparison means (12, 16, 18) for continuously comparing the instantaneous amplitudes of the mains supply voltage (Vr) and of the output voltage (Vref) of the generator (7) and for making the static switch (3) open almost instantaneously when the difference (Vd) between these two amplitudes exceeds a preset threshold (+/-S).

2. The installation according to claim 1, characterized in that the fixed set amplitude of the voltage (Vref) supplied by this generator (7) is selected appreciably equal to the voltage amplitude of the mains power supply (1).

3. The installation according to one of the claims 1 and 2, characterized in that said comparison means comprise a comparator (12) whose output is connected to the input of a threshold circuit (16), the output of the threshold circuit (16) being connected to an input (S) of a bistable switch (18) so as to supply on output of the switch a signal (A) controlling opening of the static switch.

4. The installation according to any one of the claims 1 to 3, characterized in that it comprises control means (10) for phase adjustment of the generator (7) connected to the output of the means for detecting the return of the mains power supply, means (26) for checking this phase adjustment, and control means for controlling closing of the static switch (3), when the generator (7) is adjusted in phase to the mains power supply and the difference (Vd) between the amplitudes of the mains supply voltage (Vr) and the generator output voltage (Vref) is, in absolute value, lower than said preset threshold (S).

5. The installation according to claim 4, characterized in that the means for detecting the return of the mains power supply comprise a circuit (21) for measuring the amplitude (Vmoy) of the mains supply voltage (Vr) and means for comparing this amplitude (Vmoy) with a reference value (Vm).

6. The installation according to one of the claims 4 and 5, characterized in that said means for controlling the phase adjustment of the generator (7) to the mains supply comprise an AND gate (10) an input of which receives the mains supply voltage (Vr) and the other input of which is connected to the output (25) of the means (21, 23) for detecting the return of the mains power supply, the output of the AND gate being connected to a control input (8) regulating the phase of the generator (7).

7. The installation according to any one of the claims 4 to 6, characterized in that the means for controlling closing of the static switch comprise a bistable switch (18) whose output is connected to the control input of the static switch and whose zero reset input (R) is connected to the output of the second AND gate (29), a first input of the second AND gate (29) being connected to the output (28) of the means for checking the phase adjustment and a second input (31) of the second AND gate (29) being connected, via an inverter (30) to the output of the means (12, 16) for comparing the amplitudes of the mains supply voltage (Vr) and the voltage (Vref) of the generator (7).
